# EUROPÄISCHE PATENTANMELDUNG

(11) **EP 4 656 273 A1**
(43) Veröffentlichungstag der Anmeldung: **03.12.2025**
(21) Anmeldenummer: 25178908.7
(22) Anmeldetag: 27.05.2025
(51) Int. Cl.: B01D 53/04, B01D 53/26

(54) **ANLAGE ZUR ABTRENNUNG VON KOHLENSTOFFDIOXID AUS EINEM GASSTROM**

(30) Priorität: 29.05.2024 DE 102024115079
(71) Anmelder: VOLKSWAGEN AG, 38440 Wolfsburg (DE); Everllence SE, 86153 Augsburg (DE)
(72) Erfinder: Hofer, Martin, 38118 Braunschweig (DE); Kawelke, Peter, 38442 Wolfsburg (DE); Wiegel, Marcel, 39649 Gardelegen / OT Sachau (DE); Weber, Stephan, 45699 Herten (DE)
(74) Vertreter: Gulde & Partner

(57) **Zusammenfassung**

Die Erfindung betrifft eine Anlage (10) zur Abtrennung von Kohlenstoffdioxid aus einem Gasstrom, insbesondere aus einem Luftstrom. Die Anlage (10) umfasst mindestens eine erste Funktionseinheit (11, 12, 14) und mindestens eine der ersten Funktionseinheit (11, 12, 14) in Strömungsrichtung eines Hauptluftstroms (58) durch die Anlage (10) nachgeschaltete zweite Funktionseinheit (12, 14, 16). Dabei ist vorgesehen, dass die erste Funktionseinheit (11, 12, 14) eine erste Anzahl (n) von Funktionsmodulen (30, 32, 34) und die zweite Funktionseinheit (12, 14, 16) eine zweite Anzahl (m) von Funktionsmodulen (32, 34) aufweist, wobei die zweite Anzahl (m) höher als die erste Anzahl (n) ist.

## Beschreibung

Die Erfindung betrifft eine Anlage zur Abtrennung von Kohlenstoffdioxid aus einem Gasstrom, insbesondere aus einem Luftstrom, gemäß dem Oberbegriff des unabhängigen Anspruchs.

Aus dem Stand der Technik sind Anlagen und Verfahren zum Abscheiden von Kohlenstoffdioxid aus der Umgebungsluft bekannt. Eine solche Abscheidung kann nach dem sogenannten "Direct-Air-Capture-Verfahren" durchgeführt werden, wobei das Kohlenstoffdioxid unmittelbar aus der Umgebungsluft abgeschieden, eingespeichert oder einem weiteren Prozess zugeführt werden kann. Die Abtrennung von Kohlenstoffdioxid aus der Umgebungsluft kann durch unterschiedliche Sorbenten erfolgen.

Typischerweise werden zur Abtrennung von Kohlenstoffdioxid Chemisorbenten und/oder Physisorbenten eingesetzt. Amin-basierte Chemisorbenten haben das Problem der Alterung und Degradation, wenn das Material bei Temperaturen größer ca. 60 °C mit Sauerstoff in Verbindung kommt. Dies kann während der Desorptionsphase bei Temperaturen um 100 °C passieren, wenn nicht Gegenmaßnahmen ergriffen werden, wie beispielsweise eine inerte Atmosphäre im System durch den Einsatz von Wasserdampf oder anderen Gasen. Diese Schutzmaßnahmen sind aufwendig und teuer. Physisorbenten, wie beispielsweise Zeolithen, haben das Problem, dass die Affinität des Sorbentmaterials für Wasser(dampf) höher ist als für Kohlenstoffdioxid, wodurch die Umgebungsluft vor der Zufuhr zu einem Adsorptionsraum, in welchem das Zeolithmaterial angeordnet ist, zunächst getrocknet werden muss. Eine solche Trocknung der Luft ist ebenfalls aufwendig und teuer.

Um eine effiziente Abtrennung von Kohlenstoffdioxid aus der Umgebungsluft zu erreichen, werden Anlagen zur Abtrennung von Kohlenstoffdioxid bevorzugt mit erneuerbaren Energien, insbesondere mit Wasserkraft, Geothermie, Windkraft oder Solarenergie betrieben. Ein Betrieb mit Wasserkraft wäre vorteilhaft, da diese kontinuierlich und zuverlässig zur Verfügung gestellt werden kann. Jedoch ist das Potenzial für die Energiegewinnung von Wasserkraft auf entsprechende Flussläufe reduziert und wird schon heute in vielen Regionen nahezu vollständig ausgenutzt, sodass ein Ausweitung der Nutzung von Wasserkraft limitiert ist. Geothermie kann ebenfalls kontinuierlich genutzt werden und ist daher an bestimmten Standorten eine Option. Solarenergie und Windkraft können im Wesentlichen ortsunabhängig verwendet werden, die Nutzung ist jedoch durch den Umlauf der Sonne und/oder die Wetterbedingungen am Standort beschränkt.

Nachteilig bei solchen Anlagen ist jedoch, dass die Adsorptions- und Desorptionsprozesse für Kohlenstoffdioxid sowie ein gegebenenfalls der Adsorption vorgeschalteter Trocknungsprozess der Umgebungsluft durch unterschiedliche Rahmenbedingungen, wie beispielsweise die Umgebungstemperatur, die Luftfeuchtigkeit, die Temperatur sowie den Kohlenstoffdioxidgehalt der Umgebungsluft beeinflusst werden.

Aus der WO 2015 / 024014 A1 ist ein Verfahren zur Abtrennung von Verunreinigungen aus einem Abgasstrom bekannt, bei welchem Kohlenstoffdioxid und Wasserdampf aus dem Abgasstrom abgetrennt werden und das abgetrennte Kohlenstoffdioxid gespeichert wird.

Die US 2011 / 0296872 A1 offenbart eine Anlage und ein Verfahren zur Abtrennung von Kohlenstoffdioxid aus der Umgebungsluft. Das Verfahren umfasst die Schritte der Erzeugung von Nutz- und Prozesswärme aus einem primären Produktionsprozess; Anwenden der Prozesswärme aus dem Primärprozess auf Wasser, um im Wesentlichen gesättigten Dampf zu erzeugen, abwechselnd wiederholtes Aussetzen eines Sorptionsmittels einer Entfernungs- und einer Einfang- und Regenerierungssystemphase, wobei das Sorptionsmittel abwechselnd einem Strom von Umgebungsluft während der Entfernungsphase ausgesetzt wird. Dadurch wird das Sorptionsmittel in die Lage versetzt wird, Kohlendioxid aus der Umgebungsluft zu sorbieren und nachfolgend in hoher Konzentration und Reinheit wieder abzugeben.

Ferner ist aus der US 11,383,199 B1 ein Rauchgasabsaugsystem bekannt, welches das Absaugen, Sammeln, Kühlen, Anreichern und Verteilen von Rauchgas aus einem Abluftkamin eines stationären Rauchgasgenerators und die Weitergabe von Kohlenstoffdioxid an verbrauchende Pflanzen, Obstgärten und andere photosynthetische Organismen ermöglicht. Das gesammelte Rauchgas wird in dem System verarbeitet, um eine optimale Temperatur, einen optimalen Druck, eine optimale Durchflussmenge, einen optimalen Wassergehalt und eine optimale Kohlendioxidkonzentration für die Pflanzen zu erreichen, um die Pflanzenproduktivität zu steigern und das Kohlenstoffdioxid zu binden.

Der Erfindung liegt nun die Aufgabe zugrunde, die Effizienz einer Anlage zur Abtrennung von Kohlenstoffdioxid aus einem Gasstrom zu erhöhen und die Abtrennung von Kohlenstoffdioxid sowie die Energieeffizienz der Anlage zu verbessern.

Die Aufgabe wird durch eine Anlage zur Abtrennung von Kohlenstoffdioxid aus einem Gasstrom, insbesondere aus einem Luftstrom, gelöst. Die Anlage umfasst mindestens eine erste Funktionseinheit und mindestens eine der ersten Funktionseinheit in Strömungsrichtung eines Hauptluftstroms durch die Anlage nachgeschaltete zweite Funktionseinheit. Dabei ist vorgesehen, dass die erste Funktionseinheit eine erste Anzahl n von Funktionsmodulen und die zweite Funktionseinheit eine zweite Anzahl m von Funktionsmodulen aufweist, wobei die zweite Anzahl m höher als die erste Anzahl n ist.

Die erfindungsgemäße Anlage ermöglicht einen einfachen, modularen Aufbau, bei welchem die Strömungswiderstände und somit die Verlustleistungen minimiert werden. Dadurch ist eine besonders energieeffiziente Abtrennung von Kohlenstoffdioxid aus dem Gasstrom möglich.

Durch die in den abhängigen Ansprüchen aufgeführten zusätzlichen Merkmale sind vorteilhafte Ausgestaltungen und Verbesserungen der im unabhängigen Anspruch genannten Anlage zur Abtrennung von Kohlenstoffdioxid aus einem Gasstrom möglich,

In bevorzugter Ausgestaltung der Erfindung ist vorgesehen, dass die erste Funktionseinheit eine Vorkonditionierungseinheit mit mindestens einem Filtermodul und die zweite Funktionseinheit eine Trocknungseinheit mit mindestens zwei Trocknungsmodulen ist. Bei der Verwendung eines Physisorbenten als Sorbentmaterial ist es notwendig, den Gasstrom vor dem Sorptionsprozess zu trocknen. Die Vorkonditionierungseinheit kann zusätzlich zur Filtereinheit ein oder mehrere Sorbentelemente zur Vortrocknung des Gasstroms aufweisen. Durch eine entsprechende Aufteilung auf mehrere Trocknungsmodule ist eine besonders effiziente Trocknung des Gasstroms möglich. Eine Aufteilung des Gasstroms auf mehrere Trocknungsmodule ist auch deshalb vorteilhaft, da bei einer kontinuierlichen Prozessführung nicht immer alle Trocknungsmodule zur Verfügung stehen. Somit kann sichergestellt werden, dass eine hinreichende Trocknung des Gasstroms erreicht wird, auch wenn parallel ein Trocknungsmodul gerade regeneriert wird und nicht zur Trocknung des Gasstroms zur Verfügung steht.

In weiterer bevorzugter Ausgestaltung der Erfindung ist vorgesehen, dass die erste Funktionseinheit eine Trocknungseinheit mit mindestens einem Trocknungsmodul und die zweite Funktionseinheit eine Sorptionseinheit mit mindestens zwei Sorptionsmodulen ist. Dadurch kann die benötigte Trocknungsleistung auf einfache Art und Weise an die Leistungsfähigkeit der Sorptionsmodule angepasst werden, sodass Überkapazitäten vermieden werden und eine möglichst effiziente Anlage zur Verfügung gestellt werden kann.

Alternativ ist mit Vorteil vorgesehen, dass die erste Funktionseinheit eine Sorptionseinheit mit mindestens einem Sorptionsmodul und die zweite Funktionseinheit eine Speichereinheit mit mindestens zwei Speichermodulen ist. Dadurch kann die benötigte Speicherkapazität auf einfache Art und Weise an die Leistungsfähigkeit der Sorptionsmodule angepasst werden, sodass Überkapazitäten vermieden werden und eine möglichst effiziente Anlage zur Verfügung gestellt werden kann.

In einer bevorzugten Ausgestaltung der Anlage ist vorgesehen, dass die zweite Funktionseinheit doppelt so viele Funktionsmodule wie die erste Funktionseinheit aufweist. Dadurch ist eine besonders einfache Aufteilung eines aus den Funktionsmodulen der ersten Funktionseinheit austretenden Gasstroms auf die Funktionsmodule der in Strömungsrichtung nachfolgenden Funktionseinheit möglich.

In einer weiteren bevorzugten Ausgestaltung der Anlage ist vorgesehen, dass zwischen der ersten Funktionseinheit und der zweiten Funktionseinheit ein Strömungsverteilraum angeordnet ist, um einen aus einem Funktionsmodul der ersten Funktionseinheit austretenden Gasstrom auf mehrere Funktionsmodule der zweiten Funktionseinheit aufzuteilen. Durch ein Strömungsumlenkelement ist eine besonders effiziente Aufteilung des Gasstroms mit geringen Strömungsverlusten möglich. Zudem kann durch ein Strömungsumlenkelement die Gestaltungsfreiheit erhöht werden, wodurch der benötigte Bauraum reduziert werden kann, ohne den Strömungswiderstand zu erhöhen.

In einer vorteilhaften Ausgestaltung der Anlage ist vorgesehen, dass ein Abstand zwischen der ersten Funktionseinheit und der zweiten Funktionseinheit maximal 2 Meter, vorzugsweise maximal 1,5 Meter, beträgt und besonders bevorzugt im Bereich von 1 bis 1,5 Meter liegt. Dadurch ist eine besonders kompakte Ausführung der Anlage möglich, wodurch der benötigte Bauraum und die Kosten minimiert werden können.

Besonders bevorzugt ist dabei, wenn der Abstand zwischen der Vorkonditionierungseinheit und der Trocknungseinheit bei maximal 2 Metern, vorzugsweise bei maximal 1,5 Metern, insbesondere bei einem Meter bis 1,5 Metern, liegt.

In einer vorteilhaften Ausgestaltung der Anlage ist vorgesehen, dass die Anlage eine Rückführungsleitung aufweist, mit welcher ein getrockneter, kohlenstoffdioxid-reduzierter Gasstrom stromabwärts der Sorptionseinheit entnommen und in die Vorkonditionierungseinheit zurückgeführt wird. Dadurch können insbesondere in der Vorkonditionierungseinheit befindliche zusätzliche Sorptionselemente zur Vortrocknung des Gasstroms vereinfacht regeneriert werden.

Gemäß einer vorteilhaften Ausgestaltung der Anlage ist vorgesehen, dass ein Einlass von einer Funktionseinheit senkrecht zu einem Auslass derselben Funktionseinheit ausgebildet oder angeordnet ist. Dadurch kann der Bauraum minimiert werden. Insbesondere kann dadurch die Bauhöhe reduziert werden, sodass die Funktionsmodule auf einfache Art und Weise übereinander gestapelt werden können.

In einer weiteren vorteilhaften Ausgestaltung der Anlage ist ferner vorgesehen, dass die Anlage drei in Strömungsrichtung eines Hauptluftstroms durch die Anlage aufeinanderfolgende Funktionseinheiten aufweist. Dabei weist die erste Funktionseinheit eine erste Anzahl n von Funktionsmodulen auf, die zweite Funktionseinheit weist eine zweite Anzahl m von Funktionsmodulen auf, welche größer als die Anzahl der Funktionsmodule der ersten Funktionseinheit ist, und die dritte Funktionseinheit weist eine dritte Anzahl k von Funktionsmodulen auf, welche größer als die Anzahl m der Funktionsmodule der zweiten Funktionseinheit ist. Eine solche Anordnung ermöglicht einen einfachen modularen Aufbau, bei welchem die Strömungswiderstände und somit die Verlustleistungen minimiert werden. Dadurch ist eine besonders energieeffiziente Abtrennung von Kohlenstoffdioxid aus dem Gasstrom möglich.

Besonders bevorzugt ist dabei, wenn die erste Funktionseinheit eine Vorkonditionierungseinheit, die zweite Funktionseinheit eine Trocknungseinheit und die dritte Funktionseinheit eine Sorptionseinheit ist. Dadurch kann eine optimale Abtrennung von Kohlenstoffdioxid mit einem Physisorbenten in der Sorptionseinheit erreicht werden.

In einer vorteilhaften Ausgestaltung der Anlage ist vorgesehen, dass die Anlage eine Filtereinheit, eine der Filtereinheit in Strömungsrichtung eines Hauptluftstroms durch die Anlage nachfolgende Trocknungseinheit und eine der Trocknungseinheit nachfolgende Sorptionseinheit aufweist, wobei zwischen der Filtereinheit und der Trocknungseinheit und/oder zwischen der Trocknungseinheit und der Sorptionseinheit ein Strömungsführungselement angeordnet ist, um Strömungsverluste durch Wirbelbildung und/oder Totwassergebiete zu minimieren. Dadurch können die Strömungsverluste beim Übertritt von einer Funktionseinheit in die nachfolgende Funktionseinheit minimiert werden, wodurch die Gesamteffizienz der Anlage weiter gesteigert werden kann.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine erfindungsgemäße Anlage zur Abtrennung von Kohlenstoffdioxid aus einem Gasstrom, insbesondere aus einem Luftstrom,
- Figur 2: eine Vorkonditionierungseinheit und eine Trocknungseinheit einer erfindungsgemäßen Anlage zur Abtrennung von Kohlenstoffdioxid aus einem Gasstrom sowie einen Strömungsverteilraum zur Verteilung eines Gasstroms,
- Figur 3: eine Rohrleitung zur Abfuhr eines Gasstroms an einem Austritt einer Funktionseinheit, und
- Figur 4: eine Funktionseinheit, insbesondere eine Vorkonditionierungseinheit oder eine Trocknungseinheit einer erfindungsgemäßen Anlage zur Abtrennung von Kohlenstoffdioxid aus einem Gasstrom.

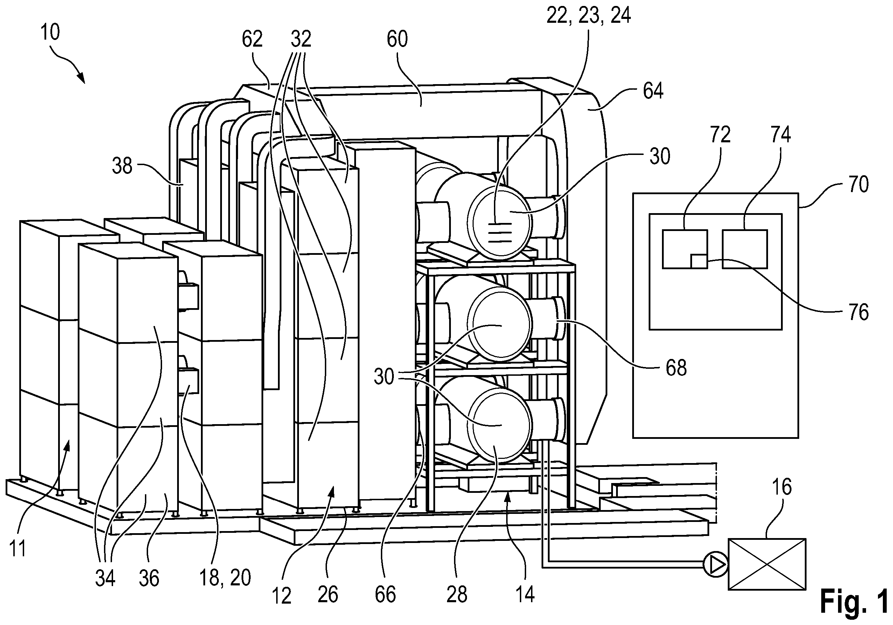

Figur 1 zeigt eine Anlage 10 zur Abtrennung von Kohlenstoffdioxid aus einem Gasstrom, insbesondere aus der Umgebungsluft. Dabei wird der Anlage 10 ein Gasstrom zugeführt, welcher eine gewisse Restfeuchte aufweist und diesem Gasstrom Kohlenstoffdioxid und Wasser entzogen wird. Aus der Anlage 10 strömt ein Abluftstrom aus, welcher gegenüber den einströmenden Gasen ein teilweise getrocknetes, kohlenstoffdioxid-reduziertes Gas aufweist.

Die Anlage umfasst eine Vorkonditionierungseinheit 11, in welcher Verunreinigungen aus dem Gasstrom herausgefiltert werden. Dabei können insbesondere Verunreinigungen wie Partikel oder Sand, aber auch Blütenpollen, Flugsamen oder Insekten aus dem Gasstrom herausgefiltert werden.

Die Anlage 10 umfasst eine Trocknungseinheit 12, in welcher dem Gasstrom die enthaltene Restfeuchte zumindest teilweise entzogen wird. Die Trocknungseinheit 12 umfasst mehrere Trocknungsmodule 32, um die Feuchtigkeit aus dem Gasstrom aufzunehmen. Als Trocknungsmittel für die Trocknungseinheit 12 kann beispielsweise ein hydrophiles Material wie Silica-Gel verwendet werden. Prinzipiell kann jedes Trocknungsmaterial verwendet werden, welches dazu geeignet ist, Feuchtigkeit aus der Luft aufzunehmen. Insbesondere kann in der Trocknungseinheit 12 auch ein Sorbentmaterial 22, insbesondere ein Physisorbent 23, als Trocknungsmittel vorgesehen sein. Bevorzugt wird ein Trocknungsmittel verwendet, welches durch eine entsprechende Prozessführung nach der Aufnahme der Luftfeuchte wieder regeneriert und erneut für den Prozess zur Verfügung steht. Dabei wird ein Trocknungsgrad des Gasstroms angestrebt, bei welchem die Restfeuchte der Luft einen Taupunkt von maximal - 30 °C, vorzugsweise -50 °C, besonders bevorzugt maximal -60 °C Taupunkt beträgt.

Die Anlage 10 umfasst ferner eine Sorptionseinheit 14, in welcher das Kohlenstoffdioxid aus dem Gasstrom, insbesondere aus der Umgebungsluft, gebunden wird. Dabei wird das sich in dem getrockneten Gasstrom befindliche Kohlenstoffdioxid in einem Sorbentmaterial 22, insbesondere in einem Physisorbenten 23, besonders bevorzugt in einem Zeolithmaterial 24 eingespeichert. Die Sorptionseinheit 14 umfasst ein oder mehrere Sorptionsmodule 30, welche jeweils ein zylindrisches Gehäuse aufweisen. Alternativ können die Sorptionsmodule 30 auch von einer Zylinderform abweichende Geometrien, aufweisen. Das Gehäuse weist eine Mantelfläche auf, wobei an einer ersten Seite der Mantelfläche eine Einlassöffnung 66 und an einer der ersten Seite gegenüberliegenden zweiten Seite der Mantelfläche eine Auslassöffnung 68 ausgebildet ist.

Darüber hinaus weist die Anlage 10 eine Speichereinheit 16 auf, in welcher das in der Sorptionseinheit 14 aus dem Gasstrom abgetrennte Kohlenstoffdioxid in konzentrierter Form eingespeichert wird. Alternativ kann das desorbierte Kohlenstoffdioxid auch direkt einer weiteren Verwendung zugeführt werden.

Die Anlage 10 umfasst ferner ein Förderelement 18, insbesondere ein Gebläse 20, mit welchem ein Gasstrom, insbesondere ein Luftstrom, durch die Trocknungseinheit 12 und anschließend durch die Sorptionseinheit 14 geführt wird.

Die Trocknung des Gasstroms erfolgt vorzugsweise in einem ersten Prozessraum 26, welcher durch Verschlusselemente, insbesondere durch Klappen im Wesentlichen gasdicht von der Umgebung abgetrennt werden kann. Dabei weist der erste Prozessraum 26 in dem dargestellten Ausführungsbeispiel eine Einlassklappe und eine Auslassklappe auf. In dem ersten Prozessraum 26 kann ein Heizelement angeordnet sein, um die Lufttemperatur in der Trocknungseinheit 12 beziehungsweise im ersten Prozessraum 26 zu manipulieren. In dem ersten Prozessraum 26 beziehungsweise in der Trocknungseinheit 12 können ferner Sensoren zur Erfassung einer Temperatur, eines Drucks, einer Kohlenstoffdioxidkonzentration, einer Strömungsgeschwindigkeit und/oder einer relativen oder absoluten Feuchte des Gasstroms angeordnet sein.

In der Vorkonditionierungseinheit 11 oder zwischen der Vorkonditionierungseinheit 11 und der Trocknungseinheit 12 ist ein Förderelement 18, insbesondere ein Gebläse 20 vorgesehen, um einen Gasstrom, insbesondere einen Luftstrom der Umgebungsluft zunächst durch die Trocknungseinheit 12 und anschließend durch die Sorptionseinheit 14 zu fördern. Das Förderelement 18 weist eine Antriebseinheit auf, deren Leistung über eine Leistungsregelung entsprechend angepasst werden kann. Alternativ kann das Förderelement 18 auch in einem Kanal zur Zuführung der Luft zu der Anlage 10 oder einem Kanal zur Abführung der Luft aus der Anlage 10 angeordnet sein.

Die Vorkonditionierungseinheit 11 ist über einen Strömungsverteilungsraum 56 mit der Trocknungseinheit 12 verbunden, um eine bestmögliche Trocknung des Gasstroms zu gewährleisten. Dabei erlaubt der Strömungsverteilraum 56 die Versorgung unterschiedlicher zum jeweiligen Zeitpunkt in der Adsorption befindlicher Trocknungsmodule 32.

Stromabwärts der Sorptionseinheit 14 zweigt eine Rückführleitung 60, 64 ab, mit welcher trockenes, kohlendioxid-reduziertes Gas in die Vorkonditioniereinheit 11 sowie in die Trocknungseinheit 12 zurückgeführt werden kann, um die Energieeffizienz bei der Trocknung des Gasstroms zu erhöhen. Dazu ist ein Verteiler 62 vorgesehen, um den getrockneten, kohlenstoffdioxidreduzierten Gasstrom auf die in der Vorkonditioniereinheit 11 befindlichen Sorptionselemente aufzuteilen und diese zu regenerieren. Der Rückgeführte Gasstrom tritt anschließend seitlich aus den Filtermodulen 34 aus der Anlage aus. Ferner wird aus der Rückführleitung 60, 64 ein Teilgasstrom abgezweigt, um die Trocknungsmodule 32 der Trocknungseinheit 12 zu regenerieren.

Die Anlage 10 wird vorzugsweise aus erneuerbaren Energien wie Windkraft oder Solarenergie mit Strom versorgt, um beim Betrieb keine zusätzlichen Kohlenstoffdioxidemissionen zu erzeugen. Dazu ist eine Windkraftanlage und/oder eine Solaranlage, insbesondere eine Solarthermieanlage oder eine Photovoltaikanlage, vorgesehen, um die Anlage mit erneuerbarer Energie zu versorgen.

Die Anlage 10 weist ferner eine Steuerungseinheit 70 mit einer Speichereinheit 72 und einer Recheneinheit 74 auf, wobei in der Speichereinheit 72 ein Computerprogrammcode 76 abgelegt ist, welcher dazu eingerichtet ist, bei Ausführung durch die Recheneinheit 74 der Steuerungseinheit 70 den Betrieb der Anlage 10 zur Abtrennung von Kohlenstoffdioxid aus dem Gasstrom, insbesondere aus der Umgebungsluft, zu steuern. Die Steuerungseinheit 70 kann über eine Datenverbindung mit einem Datenzentrum in Verbindung stehen, welches der Anlage 10 Daten zur Steuerung der Anlage 10 zur Verfügung stellt oder mit dieser austauscht.

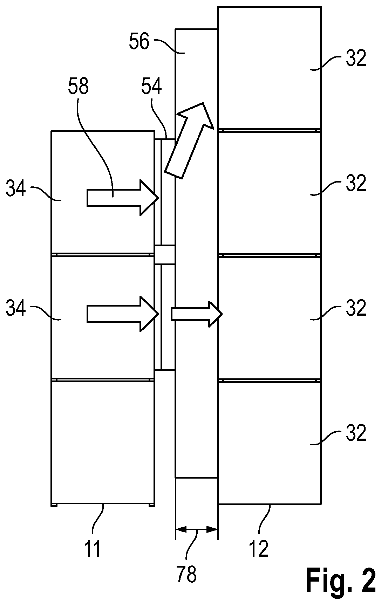

In Figur 2 sind eine Vorkonditionierungseinheit 11 und eine Trocknungseinheit 12 einer erfindungsgemäßen Anlage 10 zur Abtrennung von Kohlenstoffdioxid sowie ein Strömungsverteilraum 56 zur Verteilung eines Hauptluftstroms 58 dargestellt. Die Vorkonditionierungseinheit 11 weist mehrere Filtermodule 34 auf. In Figur 2 ist eine Vorkonditionierungseinheit 11 mit zwei Filtermodulen 34 dargestellt, welche übereinander gestapelt sind. Ferner ist in Figur 2 eine Trocknungseinheit 12 mit vier Trocknungsmodulen 32 dargestellt, welche ebenfalls übereinander angeordnet sind. Zwischen der Vorkonditionierungseinheit 11 und der Trocknungseinheit 12 sind ein Zwischenelement 54 und ein Strömungsverteilraum 56 angeordnet, mit welchem ein aus den Filtermodulen 34 der Vorkonditionierungseinheit 11 austretender Hauptluftstrom 58 umgelenkt und auf die Trocknungsmodule 32 aufgeteilt wird.

Die Luft wird von vorgeschalteten Funktionsmodulen 34 mit einer geringeren Anzahl n, insbesondere Filtermodule 34 auf nachfolgende Funktionsmodule 32, insbesondere Trocknungsmodule 32 in höherer Anzahl m, insbesondere in doppelter Anzahl m = 2n verteilt.

Die Anlage 10 zur Abtrennung von Kohlenstoffdioxid soll möglichst kurz sein, um den Bauraum bestmöglich auszunutzen. Dabei sind feste Kanäle ungünstig, da der Gasstrom zeitlich variabel in unterschiedliche Funktionsmodule 30, 32 eingebracht wird.

Die Funktionsmodule 32, 34 können zum Beispiel auf die Funktion angepasste Transportcontainer sein. Der Abstand 78 und damit der Zwischenraum zwischen den Funktionsmodulen 32, 34 beträgt bevorzugt zwischen 1 m und 1,5 m. Weitere strömungsoptimierende Änderungen zur Reduzierung von scharfen Umlenkungen oder Totwassergebieten sind möglich.

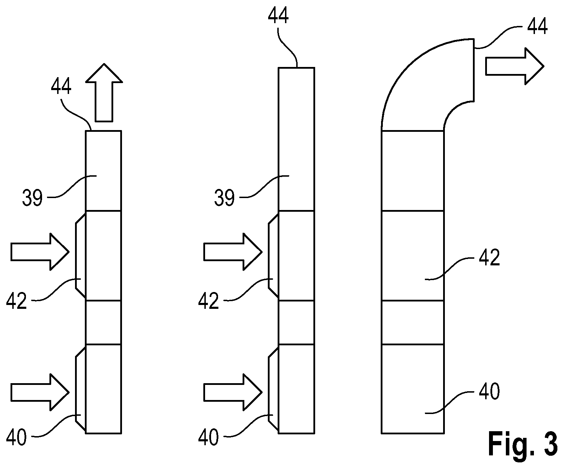

In Figur 3 ist eine Rohrleitung 39 für eine Anlage 10 zur Abtrennung von Kohlenstoffdioxid aus einem Gasstrom dargestellt. Die Rohrleitung 39 weist eine erste Öffnung 40 und eine zweite Öffnung 42 auf, mit welcher austretende Abluftströme aus zwei funktionsgleichen Funktionsmodulen einer Funktionseinheit 11 aufgenommen werden und an einer Auslassöffnung 44 wieder aus der Rohrleitung 39 austreten.

Die Abluft kann dabei seitlich aus denselben Behältern austreten, in die auch die Frischluft angesaugt wird. In einer anderen Ausführungsform kann die Luft auch aus einer anderen Anlagenkomponente austreten, die aber auch auf gleicher Höhe wie die Ansaugung liegt.

Das in Figur 3 dargestellte Konzept dient insbesondere zur Vermeidung von einer Rückansaugung von einem bereits Kohlenstoffdioxid-befreiten Gasstrom, beispielsweise bei ungünstigen Windbedingungen. Dabei wird die Abluft in einem Steigkanal über das Niveau der obersten Ansaugung geführt und erst dort der Umgebung zugeführt. Alternativ kann zusätzlich eine weitere Umlenkung in Richtung der der Ansaugung abgewandten Seite erfolgen.

Dies ist insbesondere auch im Zusammenhang mit einer Großanlage, welche mehrere erfindungsgemäße Anlagen zur Abtrennung von Kohlenstoffdioxid aufweist, relevant, denn wenn die Abluft nicht nach oben geführt wird, könnte sie immer von einer Nachbaranlage angesaugt werden und deren Betrieb beeinflussen.

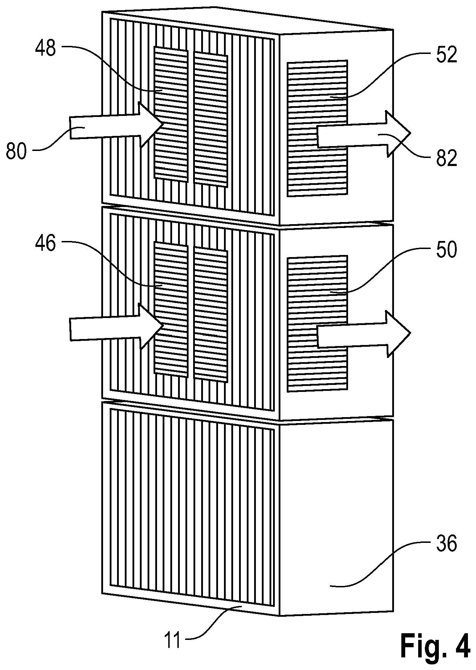

In Figur 4 ist eine weitere Funktionseinheit 11, insbesondere eine Vorkonditionierungseinheit 11 mit mehreren Funktionsmodulen 34 dargestellt. Dabei weist jedes Funktionsmodul 34 der Funktionseinheit 11 zwei Einlässe 46, 48 für einen in das Funktionsmodul 34 eintretenden Gasstrom 80 und jeweils senkrecht zu den Einlässen 46, 48 angeordnete Auslässe 50, 52 für einen aus der Funktionseinheit 34 austretenden Gasstrom 82 auf.

### Bezugszeichenliste

- 10: Anlage zur Abtrennung von Kohlenstoffdioxid
- 11: Vorkonditioniereinheit
- 12: Trocknungseinheit
- 14: Sorptionseinheit
- 16: Speichereinheit
- 18: Förderelement

- 20: Gebläse
- 22: Sorbentmaterial
- 23: Physisorbent
- 24: Zeolithmaterial
- 26: erster Prozessraum
- 28: zweiter Prozessraum

- 30: Sorptionsmodul
- 32: Trocknungsmodul
- 34: Filtermodul
- 36: dritter Prozessraum
- 38: Rohrleitung
- 39: Rohleitung

- 40: erste Öffnung
- 42: zweite Öffnung
- 44: Auslassöffnung
- 46: erster Einlass
- 48: zweiter Einlass

- 50: erster Auslass
- 52: zweiter Auslass
- 54: Zwischenelement
- 56: Strömungsverteilungsraum
- 58: Hauptluftstrom

- 60: erste Rückführleitung
- 62: Verteiler
- 64: zweite Rückführleitung
- 66: Einlassöffnung
- 68: Auslassöffnung

- 70: Steuerungseinheit
- 72: Speichereinheit
- 74: Recheneinheit
- 76: Computerprogrammcode
- 78: Abstand

- 80: eintretender Gasstrom
- 82: austretender Gasstrom

## Patentansprüche

1. Anlage (10) zur Abtrennung von Kohlenstoffdioxid aus einem Gasstrom, umfassend
- mindestens eine erste Funktionseinheit (11, 12, 14) und
- mindestens eine der ersten Funktionseinheit (11, 12, 14) in Strömungsrichtung eines Hauptluftstroms (58) nachgeschaltete zweite Funktionseinheit (12, 14, 16), wobei
- die erste Funktionseinheit (11, 12, 14) eine erste Anzahl (n) von Funktionsmodulen (30, 32, 34) und die zweite Funktionseinheit (12, 14, 16) eine zweite Anzahl (m) von Funktionsmodulen (32, 30) aufweist, wobei die zweite Anzahl (m) höher als die erste Anzahl (n) ist.

2. Anlage (10) nach Anspruch 1, wobei die erste Funktionseinheit (11, 12, 14) eine Vorkonditionierungseinheit (11) mit mindestens einem Filtermodul (34) und die zweite Funktionseinheit (12, 14, 16) eine Trocknungseinheit (12) mit mindestens zwei Trocknungsmodulen (32) ist.

3. Anlage (10) nach Anspruch 1, wobei die erste Funktionseinheit (12) eine Trocknungseinheit (12) mit mindestens einem Trocknungsmodul (32) und die zweite Funktionseinheit (12, 14, 16) eine Sorptionseinheit (14) mit mindestens zwei Sorptionsmodulen (30) ist.

4. Anlage (10) nach Anspruch 1, wobei die erste Funktionseinheit (11, 12, 14) eine Sorptionseinheit (14) mit mindestens einem Sorptionsmodul (30) und die zweite Funktionseinheit (12, 14, 16) eine Speichereinheit (16) mit mindestens zwei Speichermodulen ist.

5. Anlage (10) nach einem der Ansprüche 1 bis 4, wobei die zweite Funktionseinheit (12, 14, 16) doppelt so viele Funktionsmodule (30, 32) wie die erste Funktionseinheit (11, 12, 14) aufweist.

6. Anlage (10) nach einem der Ansprüche 1 bis 5, wobei zwischen der ersten Funktionseinheit (11, 12, 14) und der zweiten Funktionseinheit (12, 14, 16) ein Strömungsverteilraum (56) angeordnet ist, um einen aus einem Funktionsmodul (30, 32, 34) der ersten Funktionseinheit (11, 12, 14) austretenden Gasstrom auf mehrere Funktionsmodule (30, 32) der zweiten Funktionseinheit (12, 14, 16) aufzuteilen.

7. Anlage (10) nach einem der Ansprüche 1 bis 6, wobei ein Abstand (78) zwischen der ersten Funktionseinheit (11, 12, 14) und der zweiten Funktionseinheit (12, 14, 16) maximal 2 m beträgt.

8. Anlage (10) nach einem der Ansprüche 1 bis 7, wobei die Anlage (10) eine Rückführleitung (60, 64) aufweist, mit welcher ein getrockneter, kohlenstoffdioxid-reduzierter Gasstrom stromabwärts der Sorptionseinheit (14) entnommen und in die Vorkonditioniereinheit (11) zurückgeführt wird.

9. Anlage (10) nach einem der Ansprüche 1 bis 8, wobei ein Einlass (46, 48) von einer Funktionseinheit (11, 12, 14) senkrecht zu einem Auslass (50, 52) der selben Funktionseinheit (11, 12, 14) ausgebildet oder angeordnet ist.

10. Anlage (10) nach einem der Ansprüche 1 bis 9, wobei an den Gasstromauslässen der ersten Funktionseinheit (11) eine Rohrleitung (38) vorgesehen ist, wobei die Rohrleitung (38) mindestens zwei Öffnungen (40, 42) zur gemeinsamen Abfuhr eines Gasstroms der der Rohrleitung (38) unmittelbar vorgeschalteten Funktionsmodules (30, 32, 34) aufweist.

11. Anlage (10) nach Anspruch 10, wobei die erste Funktionseinheit (11) eine Vorkonditionierungseinheit (11) und die zweite Funktionseinheit (12) eine Trocknungseinheit (12) ist.

12. Anlage (10) nach einem der Ansprüche 1 bis 11, wobei die Anlage (10) drei in Strömungsrichtung eines Hauptluftstroms durch die Anlage (10) aufeinanderfolgende Funktionseinheiten (11, 12, 14, 16) aufweist, wobei die erste Funktionseinheit (11, 12) eine erste Anzahl (n) von Funktionsmodulen (32, 34) aufweist, die zweite Funktionseinheit (12, 14) eine zweite Anzahl (m) von Funktionsmodulen (30, 32), welche größer als die Anzahl (n) der Funktionsmodule (32, 34) der ersten Funktionseinheit ist, aufweist und die dritte Funktionseinheit (14, 16) einen dritte Anzahl (k) von Funktionsmodulen (30) aufweist, welche größer als die Anzahl (m) der Funktionsmodule (30, 32) der zweiten Funktionseinheit ist.

13. Anlage (10) nach Anspruch 12, wobei die erste Funktionseinheit (11) eine Vorkonditionierungseinheit (11), die zweite Funktionseinheit (12) eine Trocknungseinheit (12) und die dritte Funktionseinheit (14) eine Sorptionseinheit (14) ist.

14. Anlage (10) nach einem der Ansprüche 1 bis 13, wobei die Anlage (10) eine Vorkonditionierungseinheit (11), eine der Vorkonditionierungseinheit (11) in Strömungsrichtung eines Hauptluftstroms durch die Anlage (10) nachfolgende Trocknungseinheit (12) und eine der Trocknungseinheit (12) nachfolgende Sorptionseinheit (14) aufweist, wobei zwischen der Vorkonditionierungseinheit (11) und der Trocknungseinheit (12) und/oder zwischen der Trocknungseinheit (12) und der Sorptionseinheit (14) ein Strömungsverteilraum (56) angeordnet ist, um Strömungsverluste durch Wirbelbildung und/oder Totwassergebiete zu minimieren.
